# EUROPEAN PATENT APPLICATION

(11) **EP 2 653 620 A1**
(43) Date of publication of application: **23.10.2013**
(21) Application number: 10860748.2
(22) Date of filing: 16.12.2010
(51) Int. Cl.: E02F 9/14, E02F 3/42

(54) **DEVICE FOR FIXING HYDRAULIC PIPE OF BOOM SWING TYPE EXCAVATOR**

(71) Applicant: Volvo Construction Equipment AB, 631 85 Eskilstuna (SE)
(72) Inventor: HAN, Young-Gon, Gimhae-si Gyeongsangnam-do 621-713 (KR)
(74) Representative: Epping, Wilhelm
(86) International application number: PCT/KR2010/009022
(87) International publication number: WO 2012/081748

(57) **Abstract**

Disclosed is a device for fixing a hydraulic pipe of a boom swing type excavator, which is mounted with a working device including a boom, a boom cylinder or the like at a swing support that is mounted to the front end portion of an upper swing member so as to be able to swing, and provided with a hydraulic pipe for supplying working oil to the working device. The device for fixing a hydraulic pipe of a boom swing type excavator according to the present invention includes a swing support, which is connected to the front end of an upper swing body so as to swing, and a working device, which is rotatively fixed to the swing support, and is characterized by comprising: a first hydraulic pipe supporting hole formed in a top plate of the upper swing member so that a hydraulic pipe passes therethrough from the control valve in the upper swing member; and a second hydraulic pipe supporting hole formed in a top plate of the swing support at a position corresponding to the first hydraulic pipe supporting hole, limiting the shaking of the hydraulic pipe in the right and left directions when the working device swings, and guiding displacement in the vertical direction.

## Description

### Field of the Invention

The present invention relates to a hydraulic pipe fixing device of a boom swing type excavator on which a work apparatus is mounted so as to be swiveled horizontally with respect to an upper swing structure. More particularly, the present invention relates to such a hydraulic pipe fixing device of a boom swing type excavator that includes a swing support swingably connected to a front end portion of an upper swing structure, a work apparatus (including a boom, a boom cylinder and the like) rotatably fixed on the swing support, and a hydraulic pipe supplying a hydraulic fluid to the work apparatus.

### Background of the Invention

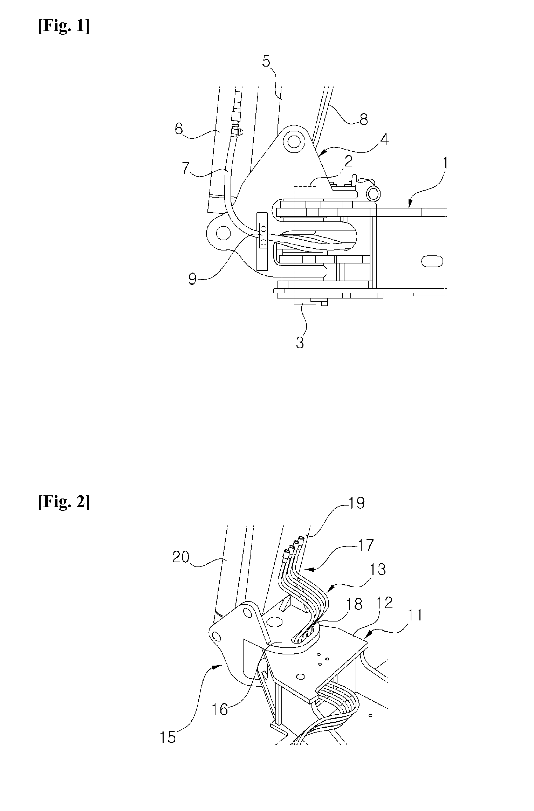

As shown in Fig. 1, a boom swing type excavator includes a swing support 4 swingably connected to a front end portion of an upper swing structure 1 by means of fixing pins 2 and 3, a swing cylinder (not shown) configured to horizontally swing the swing support 4 relative to the upper swing structure 1, a boom 54 fixed to an upper end of the swing support 4 so as to be pivotally rotated in a forward and backward direction, a boom cylinder 6 fixed to a front end of the swing support 4 and driven in response to the supply of a hydraulic fluid thereto through a hydraulic pipe 7. By virtue of the above configuration of the excavator, the work apparatus including the boom 5 can be pivotally rotated relative to the upper swing structure 1 depending on the work conditions to perform various operations.

In the hydraulic pipe fixing device of a boom swing type excavator according to the prior art as shown in Fig. 1 the hydraulic pipe 7 supplying a hydraulic fluid to the boom cylinder 5 is disposed so as to sequentially pass through a control valve (e.g., MCV not shown) mounted inside the upper swing structure 1, an internal space of the swing support 4, and a clamp 9 fixed to an outer surface of the swing support 4 in this order. In this case, the hydraulic pipe 7 which has passed through the clamp 9 is connected to the hydraulic cylinder 6 in a state of being curved or inflected so as to be displaceable according to the movement of the boom cylinder 6

Meantime, the hydraulic pipe 8 is composed of a plurality of unit pipes to supply the hydraulic fluid to an arm cylinder and a bucket cylinder (not shown). The hydraulic pipe 8 is disposed so as to sequentially pass through a control valve (e.g., MCV not shown) mounted inside the upper swing structure 1, an internal space of the swing support 4, a though-hole (not shown) formed on the swing support 4, and a space defined between the swing support 4 and a fixing pin 10 for the boom in this order. In this case, the hydraulic pipe 8 which has passed through the space defined between the swing support 4 and the fixing pin 10 for the boom is connected to a quick coupler (not shown) fixed to the upper surface of the boom 5 in a state of being curved or inflected so as to be displaceable according to the pivotal rotation of the boom 5.

In this case, the length and a degree of flection of the above-mentioned hydraulic pipes 7 and 8 are determined in consideration of the case where the boom 5 is pivotally rotated in a forward and backward direction or in a left and right direction (i.e., a horizontal direction).

As such, the length and a degree of flection of the hydraulic pipes 7 and 8 are determined in consideration of a radius of swing of the work apparatus, and then are disposed, so that the hydraulic pipes 7 and 8 are unnecessarily extended.

In addition, the hydraulic pipes 7 and 8 extending from the control valve mounted inside the upper swing structure 1 to the upper surface of the boom cylinder 6 or the boom 5 are exposed to the outside in a state of being protruded outwardly from the outer surface of the boom cylinder 6 or the swing support 4. Thus, the conventional hydraulic pipe fixing device entails a problem in that when the work apparatus is pivotally rotated relative to the upper swing structure, the hydraulic pipes 7 and 8 are abraded due to an interference with other parts positioned at a connection portion of the upper swing structure 1 and the swing support 4, and a connection portion of the swing support 4 and the boom 5, thereby shortening the lifespan of the hydraulic pipes.

Therefore is a need for a separate cover for solving the above-mentioned abrasion-related problem and protecting the hydraulic pipes 7 and 8 from being exposed to the outside

### Detailed Description of the Invention

### Technical Problems

Accordingly, the present invention was made to solve the aforementioned problem occurring in the prior art, and it is an object of the present invention to provide a hydraulic pipe fixing device of a boom swing type excavator, in which when the work apparatus is pivotally rotated or shaken (or jerked) relative to the upper swing structure, the displacement and movement of the hydraulic pipe is minimized, thereby preventing abrasion of the hydraulic pipe due to an interference with other parts.

Another object of the present invention is to provide hydraulic pipe fixing device of a boom swing type excavator in which the hydraulic pipe is not protruded outwardly from an outer surface of the boom cylinder or the swing support, thereby eliminating a necessity for a separate cover for protecting the hydraulic pipe.

### Technical Solution

To accomplish the above object, in accordance with a first embodiment of the present invention, there is provided a hydraulic pipe fixing device of a boom swing type excavator, which includes a swing support swingably connected to a front end portion of an upper swing structure, and a work apparatus rotatably fixed on the swing support, the hydraulic pipe fixing device including:
a first hydraulic pipe support hole formed on an upper plate of the upper swing structure and configured to allow a hydraulic pipe 13 to pass therethrough from a control valve inside the upper swing structure, and
a second hydraulic pipe support hole formed on an upper plate of the swing support at a position corresponding to the first hydraulic pipe support hole and configured to limit a horizontal movement of the hydraulic pipe and guide a vertical displacement of the hydraulic pipe when the work apparatus is pivotally rotated in a horizontal direction or shaken (or jerked) in a vertical direction relative to the upper swing structure.

In accordance with a second embodiment of the present invention, there is provided a hydraulic pipe fixing device of a boom swing type excavator, which includes a swing support swingably connected to a front end portion of an upper swing structure, and a work apparatus rotatably fixed on the swing support, the hydraulic pipe fixing device comprising:
a first hydraulic pipe support hole formed on an upper plate of the swing support;
a hydraulic pipe coupler fixedly mounted inside the first hydraulic pipe support hole;
a second hydraulic pipe support hole formed on an upper plate of the upper swing structure at a position corresponding to the first hydraulic pipe support hole;
a first hydraulic pipe having one end connected to the hydraulic pipe coupler and the other end connected to the work apparatus, the first hydraulic pipe being configured to be vertically moved according to a shaking or jerking movement of the work apparatus relative to the upper swing structure; and
a second hydraulic pipe having one end connected to the hydraulic pipe coupler and the other end connected to a control valve mounted inside the upper swing structure, the second hydraulic pipe being configured to be horizontally moved according to a pivotal rotation of the work apparatus relative to the upper swing structure.

### Advantageous Effect

The hydraulic pipe fixing device of a boom swing type excavator according to the embodiments of the present invention as constructed above has the following advantages.

The length of the hydraulic pipe extending from the control value (called "MCV") inside the upper swing structure to the work apparatus (including a boom cylinder or the like) is minimized, when the work apparatus including the boom and the like is pivotally rotated in a horizontal direction or shaken (or jerked) in a vertical direction relative to the upper swing structure, the displacement and movement of the hydraulic pipe is minimized, thereby preventing abrasion of the hydraulic pipe due to an interference with other parts, and thus prolonging the lifespan of the hydraulic pipe.

In addition, the hydraulic pipe is not protruded outwardly from an outer surface of the boom cylinder or the swing support, thereby eliminating a necessity for a separate cover for protecting the hydraulic pipe, and thus reducing the manufacturing cost.

### Brief Description of the Invention

The above objects, other features and advantages of the present invention will become more apparent by describing the preferred embodiments thereof with reference to the accompanying drawings, in which:
Fig. 1 is a schematic side view showing a main part of a hydraulic pipe fixing device of a boom swing type excavator in accordance with the prior art;
Fig. 2 is an assembled perspective view showing a main part of a hydraulic pipe fixing device of a boom swing type excavator in accordance with a first embodiment of the present invention;
Fig. 3 is an exploded perspective view showing a main part of a hydraulic pipe fixing device of a boom swing type excavator in accordance with a first embodiment of the present invention; and
Fig. 4 is a schematic side view showing a main part of a hydraulic pipe fixing device of a boom swing type excavator in accordance with a second embodiment of the present invention.

### * Explanation on reference numerals of main elements in the drawings *

| | | | |
|---|---|---|---|
| 12,16: | upper plate | 13: | hydraulic pipe |
| 14: | first hydraulic pipe support hole | 15: | swing support |
| 17: | work apparatus | 18: | second hydraulic pipe support hole |
| 19: | boom | 20: | boom cylinder |
| 21: | hydraulic pipe coupler | | |

### Preferred Embodiments of the Invention

Now, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

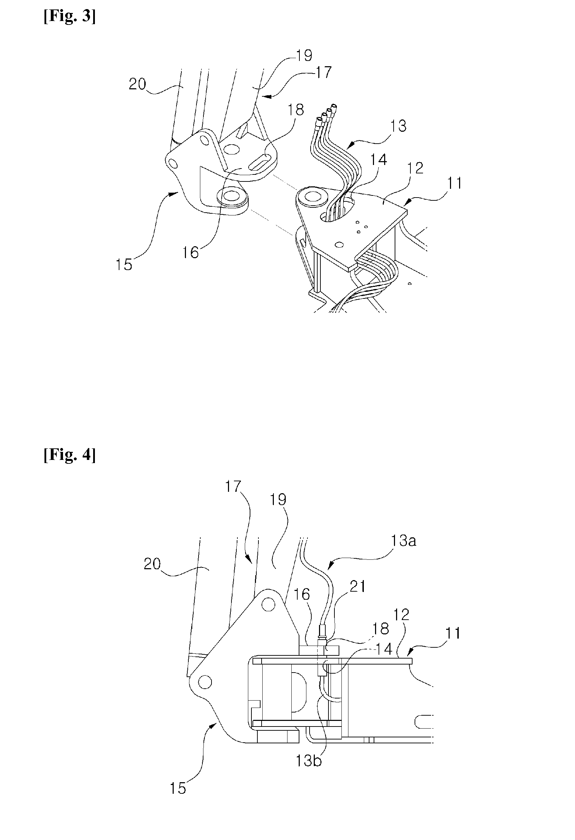

As shown in Figs. 2 and 3, in a hydraulic pipe fixing device of a boom swing type excavator in accordance with a first embodiment of the present invention, the excavator includes a swing support swingably connected to a front end portion of an upper swing structure, and a work apparatus rotatably fixed on the swing support.

The hydraulic pipe fixing device includes:
a first hydraulic pipe support hole 14 that is formed in the shape of an elongated slot on an upper plate 12 of the upper swing structure 11 so as to allow a hydraulic pipe (meaning a hydraulic pipe supplying a hydraulic fluid to a boom cylinder, an arm cylinder, or the like from the MCV) 13 to pass therethrough from a control valve (meaning MCV not shown) inside the upper swing structure 11, and
a second hydraulic pipe support hole 18 that is formed in the shape of an elongated slot on an upper plate 16 of the swing support 15 at a position corresponding to the first hydraulic pipe support hole 14 so as to limit a horizontal movement of the hydraulic pipe 13 and guide a vertical displacement of the hydraulic pipe 13 when the work apparatus 17 (including a boom, a boom cylinder, and the like) is pivotally rotated in a horizontal direction or shaken (or jerked) in a vertical direction relative to the upper swing structure 11.

Hereinafter, a use example of the hydraulic pipe fixing device of a boom swing type excavator in accordance with a first embodiment of the present invention will be described in detail with reference to the companying drawings.

As shown in Figs. 2 and 3, the hydraulic pipe 13 connected to the control valve (meaning MCV not shown) mounted inside the above-mentioned upper swing structure 11 sequentially passes through the first hydraulic pipe support hole 14 formed on the upper plate 12 of the upper swing structure 11 and the second hydraulic pipe support hole 18 formed on an upper plate 16 of the swing support 15 so as to be arranged coaxially relative to the first hydraulic pipe support hole 14. Thereafter, the hydraulic pipe 13 is fixed to an upper surface of a boom 19 (meaning an outer surface confronting a cab cap). In this case, the hydraulic pipe 13 is connected to a relay hydraulic hose connected to the boom cylinder or the arm cylinder through a quick coupler.

As a result, when the work apparatus 17 including the boom 19 is pivotally rotated relative to the upper swing structure 11 by the driving of a swing cylinder, the hydraulic pipe 13 can be arranged neatly by virtue of the second hydraulic pipe support hole 18, and a horizontal movement of the hydraulic pipe 13 can be limited and a vertical displacement of the hydraulic pipe 13 can be guided.

Thus, when the boom 19 is pivotally rotated relative to the upper swing structure 11, the vertical displacement or shaking of the hydraulic pipe 13 can be minimized, thereby preventing abrasion of the hydraulic pipe 13 due to an interference with other parts. In addition, the hydraulic pipe 13 is not protruded outwardly from an outer surface of the boom cylinder 20 or the swing support 15, thereby eliminating a necessity for a separate cover for protecting the hydraulic pipe 13.

As shown in Figs.4, in a hydraulic pipe fixing device of a boom swing type excavator in accordance with a second embodiment of the present invention, the excavator includes a swing support swingably connected to a front end portion of an upper swing structure, and a work apparatus rotatably fixed on the swing support.

The hydraulic pipe fixing device includes:
a first hydraulic pipe support hole 18 formed on an upper plate 16 of the swing support 15;
a hydraulic pipe coupler 21 fixedly mounted inside the first hydraulic pipe support hole 18;
a second hydraulic pipe support hole 14 formed on an upper plate 12 of the upper swing structure 11 at a position corresponding to the first hydraulic pipe support hole 18;
a first hydraulic pipe 13a connected at one end thereof to the hydraulic pipe coupler 21 and connected at the other end thereof to the work apparatus 17, and the first hydraulic pipe being configured to be vertically moved according to a shaking or jerking movement of the work apparatus 17 relative to the upper swing structure 11; and
a second hydraulic pipe 13b connected at one end thereof to the hydraulic pipe coupler 21 and connected at the other end thereof to a control valve (meaning MCV not shown) mounted inside the upper swing structure 11, the second hydraulic pipe being configured to be horizontally moved according to a pivotal rotation of the work apparatus 17 relative to the upper swing structure 11.

Hereinafter, a use example of the hydraulic pipe fixing device of a boom swing type excavator in accordance with a second embodiment of the present invention will be described in detail with reference to the companying drawings.

As shown in Fig. 4, the other end of the second hydraulic pipe 13b connected at one end thereof to the control valve mounted inside the upper swing structure 11 is connected to the hydraulic pipe coupler 21, the other end of the first hydraulic pipe 13a connected at one end thereof to the boom cylinder 20 including the work apparatus is connected to the hydraulic pipe coupler 21. In this case, the first hydraulic pipe 13a is connected to a relay hydraulic hose connected to the boom cylinder or the arm cylinder through a quick coupler.

As a result, when the work apparatus 17 including the boom 19 is shaken or jerked vertically relative to the upper swing structure 11 by the driving of the boom cylinder, the first hydraulic pipe 13a positioned between the hydraulic pipe coupler 21 and the work apparatus 17 is moved vertically according to the vertical shaking or jerking movement of the work apparatus 17. In this case, the amount of flection (deformation) of the first hydraulic pipe 13a can be minimized by minimizing the length of the hydraulic pipe from the hydraulic pipe coupler 21 to the work apparatus 17.

In the meantime, when the work apparatus 17 including the boom 19 is pivotally rotated horizontally relative to the upper swing structure 11 by the driving of the boom cylinder, the first hydraulic pipe 13b positioned between the control valve mounted inside the upper swing structure 11 and the hydraulic pipe coupler 21 is moved horizontally according to the horizontal pivotal rotation movement of the work apparatus 17.

That is, when the boom 19 is swiveled, the first hydraulic pipe 13a is positioned on a center line of the boom 19 or is moved together with the swing support 15. As a result, the vertical displacement or shaking of the hydraulic pipe 13b can be minimized, thereby preventing abrasion of the hydraulic pipe 13b due to an interference with other parts. In addition, the hydraulic pipe 13b is not protruded outwardly from an outer surface of the swing support 15, thereby eliminating a necessity for a separate cover for protecting the hydraulic pipe 13b.

### Industrial Applicability

According to the hydraulic pipe fixing device of a boom swing type excavator in accordance with the present invention, the length of the hydraulic pipe from the control valve (MCV) mounted inside the upper swing structure to the work apparatus (meaning the boom cylinder or the like) is optimized, so that when the work apparatus including the boom and the like is pivotally rotated in a horizontal direction or shaken (or jerked) in a vertical direction relative to the upper swing structure, the displacement and movement of the hydraulic pipe is minimized, thereby preventing abrasion of the hydraulic pipe due to an interference with other parts. Further, the hydraulic pipe is not protruded outwardly from an outer surface of the boom cylinder or the swing support, thereby eliminating a necessity for a separate cover for protecting the hydraulic pipe.

## Claims

1. A hydraulic pipe fixing device of a boom swing type excavator, which includes a swing support swingably connected to a front end portion of an upper swing structure, and a work apparatus rotatably fixed on the swing support, the hydraulic pipe fixing device comprising:
a first hydraulic pipe support hole formed on an upper plate of the upper swing structure and configured to allow a hydraulic pipe to pass therethrough from a control valve inside the upper swing structure, and
a second hydraulic pipe support hole formed on an upper plate of the swing support at a position corresponding to the first hydraulic pipe support hole and configured to limit a horizontal movement of the hydraulic pipe when the work apparatus is pivotally rotated in a horizontal direction or shaken (or jerked) in a vertical direction relative to the upper swing structure and to guide a vertical displacement of the hydraulic pipe.

2. A hydraulic pipe fixing device of a boom swing type excavator, which includes a swing support swingably connected to a front end portion of an upper swing structure, and a work apparatus rotatably fixed on the swing support, the hydraulic pipe fixing device comprising:
a first hydraulic pipe support hole formed on an upper plate of the swing support;
a hydraulic pipe coupler fixedly mounted inside the first hydraulic pipe support hole;
a second hydraulic pipe support hole formed on an upper plate of the upper swing structure at a position corresponding to the first hydraulic pipe support hole;
a first hydraulic pipe having one end connected to the hydraulic pipe coupler and the other end connected to the work apparatus, the first hydraulic pipe being configured to be vertically moved according to a shaking or jerking movement of the work apparatus relative to the upper swing structure; and
a second hydraulic pipe having one end connected to the hydraulic pipe coupler and the other end connected to a control valve mounted inside the upper swing structure, the second hydraulic pipe being configured to be horizontally moved according to a pivotal rotation of the work apparatus relative to the upper swing structure.
